# EUROPEAN PATENT SPECIFICATION

(11) **EP 2 508 271 B1**
(45) Date of publication and mention of the grant of the patent: **03.09.2014**
(21) Application number: 12460014.9
(22) Date of filing: 02.04.2012
(51) Int. Cl.: C10J 3/18, C10B 53/07, C10B 53/00, C10K 3/00, B09B 3/00

(54) **Method and system for retrieving metals, ecological sludge and energy from waste electronic equipment**
Verfahren und System zur Wiedergewinnung von Metallen, ökologischem Schlamm und Energie aus elektronischen Abfallgeräten
Procédé et dispositif de récupération des métaux, boue écologique et de l'énergie à partir d'équipement électronique usagé

(30) Priority: 06.04.2011 PL 39445811
(43) Date of publication of application: 10.10.2012
(73) Proprietor: Eko Hybres Sp. Z o.o., 36-060 Glogow Malopolski (PL)
(72) Inventor: Malecki, Stanislaw, 32-080 Zabierzow (PL); Jarosz, Piotr, 30-082 Krakow (PL); Kalawski, Krzysztof, 35-511 Rzeszow (PL); Szabowski, Jerzy, 37-203 Przeworsk (PL); Zajac, Wojciech, 35-122 Rzeszow (PL); Zajac, Kazimierz, 35-122 Rzeszow (PL)
(74) Representative: Warzybok, Tadeusz

(56) References cited:
- EP-A1- 1 656 995
- DE-A1-102004 041 494
- US-A1- 2004 134 395

## Description

The subject of this invention is a method of destruction of and retrieving metals, ecological sludge and energy (electric and thermal) from waste electrotechnical and electronic equipment and the system of plant for using this method.

Recycling of waste electrotechnical and electronic equipment is a still more and more important economical and ecological problem of the civilized world in view of rapidly increasing amount of such waste. This is connected with fast growth of production of household equipment, radio and television sets, telecommunication and computer equipment, with consumption of products of that type continuously increasing and the service life decreasing. Scrap of waste electrotechnical and electronic equipment constitute a mix of components of different types characterized by significant diversification with respect to chemical composition, including mainly Cu, Al, Pb, Si, Zn, Fe, Sr, Ag, Zr, and geometrical dimensions. This group of waste includes computers, television sets, control devices for industrial systems, telephones, radio receivers, audio and video tape players, calculators and amplifiers, as well as household equipment, especially refrigerators and washing machines. Such products contain, among other things, the above-mentioned metallic elements that are usually hermetically closed by means of a plastic, in most cases epoxy resins, thermoplastic and heat-hardening plastics, so retrieval of metal requires its separation from these substances.

Several methods of retrieving metals from electrotechnical and electronic waste are known from prior art e.g. DE 102004041494-A1, including pyrometallurgical, hydrometallurgical, biometallurgical or mechanical methods based on crushing and fragmenting materials surrounding or wrapping up metallic parts, in order to separate these parts. Other known methods consist in thermal utilization of waste of all types among which one can distinguish methods based on burning (incineration), gasification, and pyrolysis. Known are also technologies of waste electronic and electric equipment processing based typically on selective collecting and processing of different groups of such equipment including mechanical processing consisting in fragmentation and segregation with the use of different methods, especially by means of gravitational separation in water and in heavy suspension liquids or magnetic separation which is based on significant differences of content of the so-called base metals such as Fe, Cu, Al, Pb and Ni in such waste material.

Description of the European patent EP1609877B1 reveals a method of batch-wise processing of recycled materials containing metals and organic substances, such as e.g. combustible copper scrap materials, including cable scrap and electronic scrap from printed circuit boards and similar waste from computers and cellular phones, carried out in a rotary reactor. The point of the method consists in that the waste material is charged to a tiltable reactor of the commonly known as Kaldo reactor, tilted in the course of operation and rotating along its longitudinal axis, having a common opening for charging and emptying and heated to a temperature promoting the expulsion of organic constituents by pyrolysis and/or combustion, while the batch material consists at least to an essential part of such size fractions, which admit a continuous charging of the reactor during operation. In the course of operation, the scrap material is charged continuously in the form of a stream controlled and possibly regulated by means of continuous measurement of different varying processes in such a way that flow rate and composition of combustible gas and the heat generation in the process are kept under control, so the product obtained by the process, essentially free from any organic constituents, is discharged from the reactor and supplied for a typical metallurgical process. The batch material is loaded in the course of operation of the reactor by means of a charging equipment, for example a step belt that tips material down through the opening of the reactor and a lance that in operation can be inserted downwardly in the reactor opening and then be removed again. The batch material is fed to the reactor by aid of the force of gravitation and/or a pneumatic transport gas, for example pressure air, and the process control is based on one or several variable parameters characterizing gas composition, temperature and flow rate. Thanks to continuous supply of the bath material, both temperature and composition of the generated gas remain invariable in time, same as in the case of other well-known scrap combustion processes with batch-wise charging (e.g. EP-A-0451323 and DE-A-3617410), and the obtained gas flows in a controlled and predictable stream and thus can be conveniently transferred to the existing gas cleaning devices. Moreover both factors, i.e. constant temperature and constant flow of material and generated gas allow to create uniform and controlled process conditions counteracting generation of undesirable volatile substances containing metals, as well as other harmful reaction products, for example dioxins and the like, from organic substances contained in recycled products. A disadvantage of this method consists in necessity to charge the reactor rotating with high speed in continuous way in order to obtain the best possible heat exchange, fastest gasification of organic material and maximum production capacity.

Description of the European patent EP0274059B1 reveals a method of recycling of electrical batteries, assembled printed circuit boards and electronic components carried out in three stages, where the first stage is realized by means of the process of pyrolysis of unsorted elements at temperature of 450-650°C, the second stage by means of post-pyrolytic electrolysis of metal remainder in presence of borofluoric acid and its salts, and the third stage consists in separation and removal of electrolysis products collected on electrodes. In the course of pyrolysis, gaseous products of the process are separated and fed to a cooler and a wash column in which they are washed in counter-current with a 5-10% borofluoric acid, then provisionally cleaned and finally burned. Further, the solid post-pyrolytic residue is flushed with water solution of borofluoric acid, then filtered, and the filtrate is fed to a crystallization system for the salts contained therein and the obtained filter cake is fed to the electrolysis, while metals deposited on cathode are separated metallurgically, electochemically or chemically, and the obtained electrolyte is returned to the battery manufacturer. A disadvantage of this solution is the necessity to employ a complex electrochemical treatment after the pyrolysis process.

Description of patent WO24/044492A1 reveals a method and a device for comprehensive processing of municipal, industrial and special waste as well as tires by means of plasma melting allowing to retrieve materials from them, consisting in charging the waste into a reactor-gasifier, carrying out a multi-stage gasification, supplying the oxygen-containing gas to pyrolysis and gasification zone, freeing the obtained gas (syngas), melted metal and sludge from the reactor, transferring them the further processing and converting into market products. According to the method, provisionally briquetted waste in dried state is charged below the melted sludge-metal limit by a cooled channel, plasma streams are generated by means of electrode-less plasmatrons, and the oxygen-containing gas is supplied also below the melted sludge-metal limit.

Purpose of the present invention is to provide such method of destruction and retrieving metals from scrapped electrotechnical and electronic equipment that the closed system of devices of the plant will allow to use the physical principle of conservation of mass, i.e. in the course of the technological process, the sum of masses of the obtained products in the form of casting alloys, ecological sludge and gas provided for reuse and combustion gases channeled to the stack will equal the mass of the above-mentioned waste equipment collected and transferred to the main storage.

A further purpose of the invention is to provide a system of the plant of devices allowing to realize the above method.

The point of the invention providing a method of destruction of and retrieving metals from waste electrotechnical and electronic equipment consists in that it is carried out in three basic process stages, closely interrelated and following in succession, where:
- the first stage consists in that waste equipment stored in the main storage and containing components with content of iron, copper, aluminum, plastic and other materials is transported by means of belt conveyors from said storage to a multi-station semi-automatic processing line on which said equipment is disassembled and sorted by type, such as components containing iron parts, plastics, copper components, aluminum-containing parts, electrical batteries and luminophore sucked-off from picture tubes as well as refrigerants and oils retrieved from refrigerating devices to storages; further, the sorted iron parts and components containing aluminum alloys are transferred directly to storages for further commercial use, while elements containing plastics sorted on the line are transferred to a two-stage fragmentation station in order to obtain a fraction with dimensions less than 10 mm and then to a storage, and components containing copper sorted on the line are transported to the crushing and fragmentation station in order to obtain fraction with dimensions less then 20 mm and then to a storage, while electrical batteries sorted and separated in the main storage are transported to the station of fragmentation in a mill and to a storage; and industrial catalysts are transported to their storage.
- In the second stage, crushed plastics from the storage are transported to the energy generator where at temperature 1500-1600°C they are subject to gasification in oxygen-free atmosphere as a result of which syngas is liberated and trace quantities of metal alloys as well as sludge, while crushed electronic modules, components and cables are transported in a continuous way to converter-plasma furnace with external arc, where at temperature of 2000-5000°C and in atmosphere of nitrogen they are subject to thermal decomposition; as a result of such destruction, an alloy of metals is obtained containing mainly copper and smaller amounts of Sn, Fe, Al, Pb, Zn and trace quantities of Ag, and besides sludge and syngas, dusts of which together with syngas dusts are provisionally intercepted in the converter and subject to granulation in the dust granulator, while fragmented batteries from the storage and dust granulate together with industrial catalysts from the storage, luminophore and oil from storage are transported to the gasifier-plasma furnace with internal arc where at temperature 3000-5000°C in oxide-free atmosphere and subject to thermal transformation and destruction as a result of which a metal alloy is obtained, some small amount of sludge, and syngas with properties similar to this obtained from converter-plasma furnace.
- Further, in the third stage, the syngas liberated in the energy generator, the syngas liberated in the converter-plasma furnace and the syngas secreted in gasifier-plasma furnace are all transported to plasma converter fed with high-energy plasma stream with temperature of 3000-8000°C an in conditions of occurrence of large dynamic forces induced by plasma stream at temperature 1200-1400°C during a period of about 2 seconds, the syngas is subject to effective decomposition into harmless fuel gas containing fundamental molecules that is transported to the cooling-cleaning device, where in a period of about 1 second it is cooled down to temperature of 700-800°C by means of violent mixing with the same gas cooled earlier down to temperature of about 100°C, while volatile gases of metals such as zinc, lead and mercury that can be still presents in syngases are separated in the course of cooling and sediment on lower parts of cooling devices and then are transferred for utilization by induction crucible furnaces in the fire refining of metal alloys, while the resulting dust is transferred to the dust granulator, and the cooled gas is subject to further cleaning in the scrubber of cooling-cleaning devices from the remaining undesirable Cl and Fe compounds; then, the gas cleaned this way is subject to burning in gas furnace in order to retrieve thermal energy, while metal alloys separated in the course of the process in the energy generator, plasma converter and plasma gasifier containing mainly copper and sludge are transported to induction crucible furnaces where they are subject to fire refining and casting into required copper-based alloys, while the sludge released earlier and containing mainly aluminum and silicone oxides is subject to thermal processing aimed at chemical reduction leading to obtaining its glazed fraction resistant to leaching.

The fuel gas obtained in the course of the process in plasma gasifier and plasma converter is preferably continuously controlled at its output on an electronic disintegration process control station in such a way that the content of CO and CO₂ is maintained with the following condition being met: 0.2 < CO₂ / (CO₂ + CO) < 0.4.

On the other hand, the point of the system of plant for application of the method according to the invention consist in that it comprises the main storage of collected electrotechnical and electronic equipment that by means of a belt conveyor is coupled with multi-station processing line for disassembling and segregation of components of said equipment, and by means of belt conveyors via storage for electrical batteries with the battery fragmentation mill, storage for fragmented batteries and gasifier-plasma furnace, and by means of another conveyor with the storage of industrial catalysts and the gasifier-plasma, while the process line is coupled by means of a belt conveyor with the storage of parts containing iron and by means of another conveyor with the storage of components aluminum, an further, via appropriate belt conveyors with the plastics crusher and storage and with the energy generator, with copper parts crusher and storage, the converter-plasma furnace, and the storage for luminophore, oil and refrigerants, the gasifier-plasma furnace and the storage for electrical batteries and mill for fragmentation of batteries and also with the gasifier-plasma furnace, while metal alloys and slag obtained in these devices are directed to the common conveyor coupled with crucible induction furnaces for fire refining that in turn are coupled with sludge reducer, while syngases obtained in these devices are directed to the common conveyor coupled with dust granulator and plasma converter connected with the cooling-cleaning device, which in turn is connected with the gas furnace connected with heat exchanger and gas turbine, and via the combustion gas emission monitoring device is connected with the stack, and additionally, by means of a conveyor, with dust granulator, and by means of a belt conveyor with induction crucible furnaces.

The plasma converter is preferably fed with high-energy plasma stream from plasma generator with temperature of 3000-8000°C.

Moreover, the converter-gas furnace used is preferably of external arc type with temperature of 2000-5000 C, operating in nitrogen atmosphere and equipped with cyclone system for interception of dusts.

Further, the converter-plasma furnace used is preferably of internal arc type with temperature 3000-5000°C, operating in oxygen-free atmosphere and equipped with cyclone system for interception of dusts, and the disintegration process control station is equipped with electronic system provided with CO and CO₂ sensors, thermocouples and solenoid valves allowing to stabilize the gas cleaning process with the following condition being met: 0.2 < CO₂ / (CO₂ + CO) < 0.4.

Both the method and the system of plant for application of the method according to the invention are characterized by many advantages compared to solutions known from prior art.

The method is a "co-generation" one; in one location, electrotechnical and electronic waste is subject, with the use of mainly physical phenomena, to a process leading to retrieval of primary raw materials such as copper and its alloys, with some of the material used for generation of energy and production of ecological material, namely the glazed sludge. This method of waste utilization produces virtually no further waste. The only waste is a small amount of combustion gas emissions that is significantly lower than international standards applicable in that area.

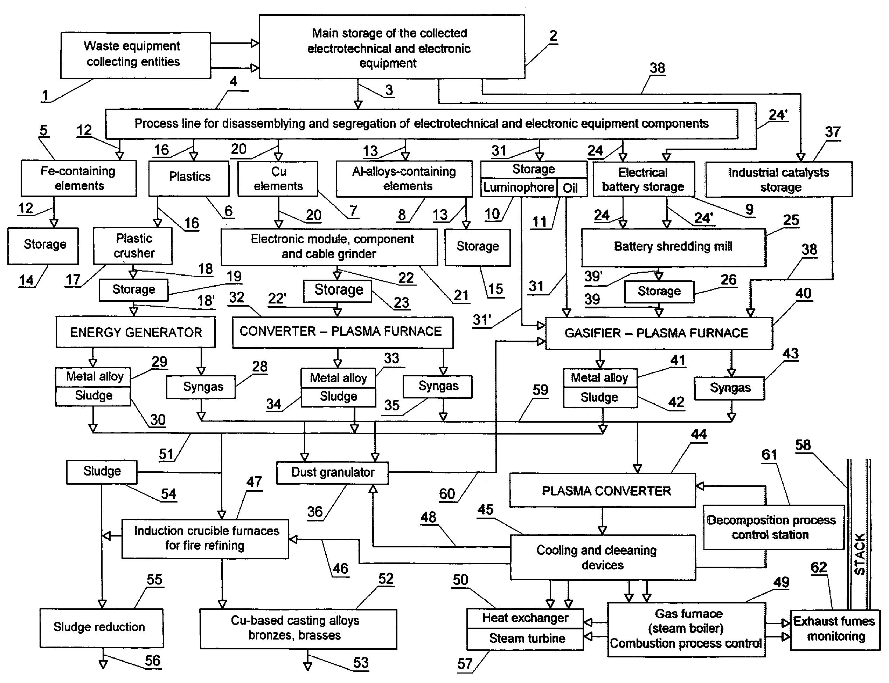

The subject of this invention was explained be means of its example embodiment shown in the figure representing a block diagram of the plant for carrying out the process of destruction of and retrieving metals, ecological sludge, gas and thermal energy from waste electrotechnical and electronic equipment containing ferrous metals, non-ferrous metals and industrial catalysts.

The method of destruction and retrieval of metals and their alloys, ecological sludge, thermal energy and gas from such waste equipment according to this invention consists in that the process is carried out in a several stages closely interrelated and following in succession after prior collection of waste electrotechnical and electronic equipment containing especially television and radio sets, computers, coolers, refrigerators and electrical batteries carried out by waste collecting entities (1), sorting it by types and storing in main storage (2) equipped with several levels' racks and containers, where:
- in the first stage of the process, the waste equipment containing iron, copper, aluminum and plastic elements, sorted by type and stored, is from storage (2) supplied by means of belt conveyors (3) to the multi-station semi-automatic processing line (4) equipped with, among other things, special workstations for disassembling picture tubes and refrigerating units, on which disassembly of the equipment is carried out and its sorting into groups of components containing iron (5), plastics (6), copper components (7), elements containing aluminum alloys (8), electrical batteries (9), luminophore sucked-off from picture tubes and oil retrieved from refrigerating devices as well as transferring to storages (10 and 11).
   Sorted iron components (5) and elements containing aluminum alloys (8) by means of belt conveyors (12 and 13) are transported directly to storages (14 and 15) for further commercial use, e.g. by appropriate smelting plants. Further, components containing plastics (6) sorted on process line (4) are transported by belt conveyor (16) to the two-stage fragmentation station (17) in order to obtain fraction with dimensions less than 10 mm, from which by means of tubular conveyor (18) they are transported to storage (19), while copper-containing components (7) sorted on said line are transported by means of belt conveyor (20) to the crushing and fragmentation station (21) in order to obtain fraction with dimensions less then 20 mm, and then by means of feeder (22) are transported to storage (23), while electrical batteries (9) sorted on the process line (4) and separated in storage (2) are transported by means of belt conveyors (24) and (24') to the battery storage (9) and to the station for fragmentation in the mill (25) from which they are transported by means of conveyor (39') to storage (26).
- In the second stage of the process according to the invention, crushed plastics from the storage (19) are by means of conveyor (18') transported to the energy generator (27) where at temperature 1500-1600°C they are subject to gasification in oxygen-free atmosphere as a result of which syngas (28) is liberated (28) and trace quantities of metal alloys (29) and as well as sludge (30), while crushed electronic modules, components and cables are continuously transported from storage (23) by means of conveyor (22') to the converter-plasma furnace (32) with external arc, where in atmosphere of nitrogen and at a temperature amounting to 2000-8000°C they are subject to thermal decomposition; as a result of such destruction, an alloy of metals (33) is obtained containing mainly copper and smaller amounts of such metals as: Sn, Fe, Al, Pb, Zn and trace amounts Ag as well as sludge (34) and syngas (35), with this gas composed mainly from carbon oxide, nitrogen and dusts comprising mainly carbon and vapors of oxides - volatile metal compounds with low melting temperatures, with such dusts in converter equipped with cyclone system being provisionally intercepted and subject to granulation in the dust granulator (36) together with dust separated from syngases (28, 35, 43). Further, fragmented batteries from storage (26) and the dust granulator (36) and industrial catalysts (37), luminophore (10) and oil (11) are transported by means of conveyor (38) are transported form the storage (2) and by means of conveyors (39, 60, 32 and 32') are transported to gasifier-plasma furnace (40) with internal arc, where at temperature of 3000-5000°C and in oxygen-free temperature they are subject to thermal transformation and destruction as a result of which obtained is a metal alloy (41), small amount of sludge (42) and syngas (43), with properties similar to those of the syngas obtained from the converter-plasma furnace (32), where the gasifier is also equipped with the cyclone system for interception of dusts provided for further granulation and retrieval of metal alloys (41).
- In the third stage of the destruction process, syngas (28) liberated in the energy generator (27), syngas (35) liberated in the plasma converter (32) and syngas (43) converted in plasma gasifier (40) are transferred to the plasma converter (44) fed with high-energy plasma stream from plasma generator with temperature of 3000-5000°C and in the conditions of occurrence of large dynamic forces induced by plasma stream at temperature of 1200-1400°C and in the course of a period of about 2 seconds, the syngas is subject to effective decomposition to harmless fuel gas containing basis molecules, whereas content CO and CO₂ at the output is controlled and maintained in such a way that the condition 0.2 < CO₂/(CO₂ + CO) < 0.4 is met, as maintenance of such conditions reduces production of hazardous dioxins and furanes to a minimum; in fact, it is well known that HCN compounds can be created when the ratio is less than 0.2 and NOx compounds when the ratio is greater than 0.4. Maintenance of the above parameters on the required level is carried out in a continuous way with the use of automatic information system. Further, hot fuel gas produced in plasma converter (44) is transferred to the cooling-cleaning device (45) in which during a period of less than 1 s it is cooled down to temperature of 700-800°C. The cooling occurs by means of violent mixing of the gas with the same gas cooled earlier down to temperature of about 100°C, while volatile vapors of metals such as zinc, lead and mercury that can appear in syngases (28), (35) and (43) are separated in the course of such cooling, sediment in lower parts of cooling devices (45) and are transferred by conveyor (46) for utilization in induction crucible furnaces (47) for fire refining, while the dust is transported by means of conveyor (48) to dust granulator (36). The cooled gas is subject to further cleaning in the scrubber of devices (45) on order to remove undesirable Cl compounds as well as solid and acid components, and the gas cooled and cleaned this way with the following composition: N ∼ 60%, H₂ ∼ 20%, CO ∼ 14%, CO₂ ∼ 5%, (CH₄ +C₂H₂ +C₂H₄ + C₂H₆ + C₅-₈ + C₄ + C₃) ∼ 1% is subject to burning in gas furnace (49) in order to retrieve heat energy while cooling this gas down occurs in the heat exchanger (50) of special design.

Further, metal alloys liberated in the course of the process in the energy generator (27), plasma converter (32) and plasma gasifier (40) containing mainly copper ((29), (33) and (41)) and sludge ((30), (34) and (42)) are transported by conveyor (51) to induction crucible furnaces (47) where they are subject to fire refining in the course of which undesirable elements, especially iron, are removed by means of the oxygen blowing lance, and after that the alloys are subject to casting into required shapes and put for commercial use (53), while the sludge (54) liberated earlier in the course of this operation containing primarily aluminum and silicon oxides is subject to thermal processing aimed at its reduction (55) leading to obtaining a glazed fraction resistant to leaching and thus safe for the natural environment, and is also put for commercial use (56) as, for instance, a building material.

Steam generated in gas furnace-steam boiler (49) is used for the plant's own needs and to power the steam turbine (57), the energy generated by which powers internal technological devices of the plant. Moreover, in the course of carrying out the decomposition process in the plasma converter (44) and the cooling and cleaning process in devices (45), continuous control is carried out of the decomposition process control station (60) by means of electronic system equipped with CO and CO₂ sensors, thermocouples and solenoid valves (not shown in the figure) that allow to stabilize the gas cleaning process in such a way that the condition 0.2 < CO₂/(CO₂ + CO) < 0.4 is maintained. The whole technological process starting from the plasma converter (44) is continuously monitored and controlled, with the monitoring covering content of more that 50 different chemical structures, particularly CO, CO₂, CH₄, H₂, H₂O NO, NO₂, SO₂, NH₃, HF and HCl, while at the same time, emission of combustion gas (62) through the stack (58) to atmosphere is monitored.

The system of plant for application of the method according to the invention shown in its example embodiment in the figure comprises the main storage (2) equipped with four-level racks and containers for storage of collected and sorted waste electrotechnical and electronic equipment coupled by means of belt conveyors (3) with multi-station processing line (4) for waste equipment disassembling and sorting and by means of conveyor (24) with the battery storage (9), and by means of belt conveyor (38) with the industrial catalysts storage (37) and with the gasifier-plasma furnace (40) with external arc and a cyclone system for interception of dusts. The process line (4) equipped with twenty workstations for manual disassembling, a workstation for picture tube disassembling and luminophore sucking off and a semi-automatic station for disassembling refrigerating units and sucking off oils and refrigerants from them, not shown in the diagram, is by means of belt conveyors (12) and (13) connected with storage (14) of elements containing Fe (5) and the storage (15) containing Al alloys (8); by means of belt conveyors (16 and 18) with crusher (6) and storage (19) of plastics; by means of belt conveyors (20 and 22) with crusher (21) of electronic modules, components and cables (21) containing copper parts (7) and with storage (23) or such parts; by means of conveyors (31, 31') with storages for luminophore (10) and oil (11); and by means of conveyor (24) with storage of batteries (9), mill (25) for crushing them and storage (26) for fragmented batteries.

Further, storage (19) of fragmented plastics is connected via belt converter (18') is connected with energy generator (27); storage (23) of fragmented copper components is connected by means of belt conveyor (22') with the converter-plasma furnace (32) with external arc and a cyclone system for preliminary interception of dusts, while the storage (26) for fragmented electrical batteries via a belt conveyor (39) is connected with gasifier-plasma furnace (40) that also via a belt conveyor (30, 31') is connected with luminophore storage (10) and oil storage (11).

Moreover, the energy generator (27), converter-plasma furnace (32) and gasifier-plasma furnace (40) are connected by means of belt conveyor (51) that transports metal alloys and sludge obtained in these devices with induction crucible furnaces (47) for fire refining, and by means of feeder (59) transporting syngases obtained in them, said devices are also connected with the dust granulator (36) and with the plasma converter (44) fed with high-energy plasma stream with temperature of 3000-5000°C from plasma generator, while the converter, via the disintegration process control system (61), is coupled with the cooling-cleaning device (45) provided with a scrubber in order to remove solid and acid components and in heat exchangers (50), steam turbine (57) and steam boiler (49) connected via the combustion gas emission monitoring system (62) with the combustion gas stack (58).

## Claims

1. A method of destruction of and retrieving metals, ecological sludge, gas and energy from waste electrotechnical and electronic equipment consisting in its storing, disassembling and sorting, fragmentation of dismounted components containing metals and their alloys as well as plastics, feeding them to appropriate furnace for gasification with simultaneous smelting, and transferring the obtained product for further processing which is carried out in three fundamental and strictly mutually interrelated successive processing stages, where:
- the first stage consists in that the waste equipment containing iron, copper, aluminum and plastic components, stored in the main storage (2), is, by means of belt conveyors (3), supplied from said storage to a multi-station semi-automatic processing line (4), on which said equipment is disassembled and sorted into groups of components containing iron (5), plastics (6), copper (7) and aluminum (8), electrical batteries (9); moreover, luminophore sucked-off from picture tubes as well as refrigerant and oil from refrigerating units are stored in storages (10 and 11); further, sorted iron components (5) and parts containing aluminum alloys (8) are transferred directly to storages (14 and 15) for further commercial utilization, while plastics-containing components (6) sorted on the process line (4) are transferred to the two-stage fragmentation station (17) in order to obtain fraction with dimensions less then 10 mm, and then to storage (19); similarly, copper-containing components (7) sorted on said line are transported to the crushing and fragmentation station (21) in order to obtain fraction with dimensions less then 20 mm, and then to storage (23); electrical batteries (9) sorted and separated in the main storage (9) are transferred for fragmentation to the mill (25) and then to storage (26), and industrial catalysts to storage (37);
- in the second stage, crushed plastics from storage (19) are transported to the energy generator (27) where at temperature 1500-1600°C they are subject to gasification in oxygen-free atmosphere as a result of which syngas (28) is liberated and trace amounts of metal alloys (29) and sludge (30), while fragmented electronic modules, components and cables from the storage (23) are transported continuously to converter-gas furnace (32) with external arc where at temperature of 2000-5000°C and in atmosphere of nitrogen they are subject to thermal decomposition where as a result of such destruction, a copper-based metal alloy (33) is obtained containing also smaller amounts of Sn, Fe, Al, Pb, Zn and trace amounts of Ag, and furthermore sludge (34) and syngas (35) dust of which, together with dusts from syngas (28) are provisionally intercepted in this converter and subject to granulation in the dust granulator (36), while fragmented batteries from storage (26) and the dust granulator (36) together with industrial catalysts from storage (37), luminophore and oil from storages (10 and 11) are transferred by means of conveyors (38; 31'; 31; 39'; 39; 60) to gasifier-plasma furnace (40) with internal arc where at temperature 3000-5000°C and in oxygen-free atmosphere are subject to thermal transformation and destruction as a result of which metal alloy (41) is obtained, as well as a small amount of sludge (42) and syngas (43) with properties similar to those of syngas obtained from converter-plasma furnace (32).
- in the third stage, syngas (28) liberated in the energy generator (27), syngas (35) liberated in the converter-plasma furnace (32) and syngas (43) liberated in gasifier-plasma furnace are transferred to the plasma converter (44) fed with high-energy plasma screen with temperature of 3000-8000°C and in conditions of occurrence of large dynamic forces induced by plasma stream at temperature 1200-1400°C where in the period of about 2 seconds the syngas are subject to effective decomposition into harmless fuel gas containing basic molecules that is transported to the cooling-cleaning device (45) in which during a period of about 1s it is cooled down to temperature of 700-800°C by means of violent mixing of the gas with the same gas cooled earlier down to temperature of about 100°C, while volatile gases of metals such as zinc, lead and mercury that can be still presents in syngases (28 ), (35) and (43) are separated in the course of cooling and sediment on lower parts of cooling devices (45), and then are transferred for utilization in induction crucible furnaces (47) for fire refining of metal alloys (29), (33) and (41), while the resulting dust is transferred to the dust granulator (36), and the cooled gas is subject to further cleaning in the scrubber of cooling-cleaning devices (45) from the remaining undesirable Cl and Fe compounds; then, the gas cleaned this way is subject to burning in gas furnace (49) in order to retrieve thermal energy, while metal alloys separated in the course of the process in the energy generator (27), plasma converter (32) and gas gasifier (40) containing mainly copper (29), (33) and (41) and sludge (30), (34) and (42) are transported to induction crucible furnaces (47), where they are subject to fire refining and casting into required copper-based alloys, while the sludge (54) obtained - earlier and containing mainly aluminum and silicone oxides is subject to thermal processing aimed at its reduction (55) leading to obtaining its glazed fraction resistant to leaching.

2. A method of destruction according to Claim 1 **characterized in that** in the course of carrying out the process in plasma gasifier (40) and plasma converter (44), the fuel gas obtained at the output is continuously controlled by means of the electronic decomposition process control system (61) in such a way that the content of CO and CO₂ is be maintained with the following condition met: 0.2 < CO₂ / (CO₂ + CO) < 0.4.

3. A system of plant for destruction of and retrieving metals, ecological sludge and energy from waste electrotechnical and electronic equipment comprising a storage for such equipment, a device fragmenting and a furnace gasifying said equipment coupled with each other by means of transport conveyors and comprising the main storage (2) of collected electrotechnical and electronic equipment that by means of belt conveyor (3) is coupled with the multi-station semi-automatic processing line (4) for disassembly and sorting of components of said equipment, and by means of belt conveyors (24' and 39) through storage (9) of electrical batteries with mill (25) for fragmenting them and storage (26) thereof and gasifier-plasma furnace (40), and by means of conveyor (38) from the industrial catalysts storage (37) and gasifier-plasma furnace (40), while the process line (4) is coupled by means of belt conveyor (12) with storage (14) of components containing iron; by means of conveyor (13) with storage (15) of components containing aluminum; and by means of appropriate belt conveyors (16 and 18, 20 and 22, 31, 24 and 39) with crusher (17) and storage (19) of plastics and with the energy generator (27), with crusher (21) and storage (23) of copper components, further with the converter-plasma furnace (32), and storage (10) for luminophore and (11) oil and refrigerants,
while metal alloys (29, 33 and 41) and sludge (30, 34 and 42) obtained in these devices are directed to the common belt conveyor (51) coupled with induction crucible furnaces for fire refining (47) coupled in turn with sludge reducer (55), and syngases (28, 35, 43) obtained in these devices are directed to a feeder (59) coupled with the dust granulator (36) and plasma converter (44) connected with the cooling-cleaning device (45), that in tun is connected with the gas furnace (49), connected with heat exchanger (50) and steam turbine (57), and via the combustion gas emission monitoring device (62) is connected with the stack (62) and additionally by means of conveyor (48) with the dust granulator (36), and by means of belt conveyor (46) with induction crucible furnaces (47).

4. The system according to Claim 3 **characterized in that** it utilizes the plasma converter (44) fed with high-energy plasma stream from a plasma generator with temperature of 3000-8000°C.

5. The system according to Claim 3 **characterized in that** it utilizes the converter-plasma furnace (32) with external arc operating at temperature of 2000-5000 C in nitrogen atmosphere, equipped with a cyclone system for interception of dusts.

6. The system according to Claim 3 **characterized in that** it utilizes the gasifier-plasma furnace (40) with internal arc with temperature of 3000-5000°C and oxygen-free temperature, equipped with cyclone system for interception of dusts.

7. The system according to Claim 3 **characterized in that** the decomposition process control system (61) is equipped in electronic system provided with CO and CO₂ sensors, thermocouples and solenoid valves allowing to stabilize the gas cleaning process with the following condition being met: 0.2 < CO₂/ (CO₂ + CO) < 0.4.

## Patentansprüche

1. Verfahren und System zur Wiedergewinnung von Metallen, ökologischem Schlamm, und Energie aus elektronischen Abfallgeräten, bestehend in ihrer Lagerung, Zerlegung der abgebauten Teile, die Metalle und ihre Legierungen sowie Kunststoffe enthalten, ihrer Zuführung in entsprechenden Ofen zur Vergasung mit der gleichzeitigen Schmelzung und Übertragung des erhaltenen Produkts zur weiteren Verarbeitung, die in drei technologischen, streng miteinander zusammenhängenden Etappen erfolgt, wobei:
- erste Etappe darin besteht, dass die Abfallgeräte, die Eisen-, Kupfer, Aluminiumteile, Kunststoffe beinhalten, im Hauptlager (2) gelagert, aus diesem Lager über die Bandförderer (3) zu einer halbautomatischen Mehrstationen-Verarbeitungsanlage (4) zugeführt werden, auf der die genannten Geräte abgebaut und in Gruppen der Teile, die Eisen (5), Kunststoffe (6), Kupfer (7) und Aluminium (8) sowie elektrische Batterien (9) enthalten, einsortiert werden; zudem werden Luminophor, der aus der Bildröhre abgesaugt wird, sowie Kältemittel und Öl, die von Kühlanlagen wiedergewonnen werden, in den Lagern (10 und 11) gelagert; dann werden die sortierten Eisenteile (5) und die Teile, die Aluminiumlegierungen (8) enthalten, direkt in die Lager (14 und 15) zur weiteren kommerziellen Verwendung übergeben, dagegen werden die in der Verarbeitungsanlage (4) sortierten Teile (6), die Kunststoffe enthalten, zu der zweistufigen Zersplitterungsstation (17) übergeben, so dass die Fraktionen mit den Abmessungen kleiner 10 mm erhalten werden und danach ins Lager (19) übergeben; ähnlicherweise werden die in dieser Anlage sortierten Teile, die Kupfer (7) enthalten, zur Zerbröckelungs- und Zersplitterungsstation (21) befördert, so dass die Fraktionen mit den Abmessungen kleiner 20 mm erhalten werden und dann ins Lager (23) befördert; elektrische Batterien (9), die im Hauptlager (2) sortiert und abgetrennt werden, werden zur Mühle (25) zwecks Zerkleinerung und dann ins Lager (26) und die Industriekatalysatoren ins Lager (37) übergeben;
- in der zweiten Etappe die zerbröckelten Kunststoffe aus dem Lager (19) in den Energieerzeuger (27) befördert werden, wo sie bei der Temperatur 1500-1600°C in der sauerstofffreien Atmosphäre vergast werden, dadurch werden das Synthesegas (28) und die Spurenmengen von Metalllegierungen (29) und Schlamm (30) befreit, während die zerkleinerten Module und elektronischen Teile sowie Kabel aus dem Lager (23) dauernd zum Konverter-Plasmaofen (32) mit externem Bogen übersandt werden, wo bei der Temperatur 2000-5000°C und in der Stickstoffatmosphäre deren thermischer Zerfall vorkommt zerkleinerte Module und elektronische Teile sowie Kabel aus dem Lager (23) werden dauernd zum Konverter-Plasmaofen (32) mit externem Bogen übersandt, wo bei der Temperatur von 2000-5000°C und in der Stickstoffatmosphäre deren thermischer Zerfall vorkommt, und infolge dieser Destruktion erhält man Metalllegierung (33) auf Basis von Kupfer mit dem geringeren Gehalt von Sn, Fe, Al, Pb, Zn und Spurenmenge von Ag, und überdies Schlamm (34) und Synthesegas (35), dessen Stäube zusammen mit den Stäuben von Synthesegas (28) in diesem Konverter vorläufig abgefangen werden und der Granulierung im Staubgranulierer (36) unterzogen werden, während die zerkleinerten Batterien aus dem Lager (26) und Granulat aus dem Staubgranulierer (36) mit den industriellen Katalysatoren aus dem Lager (3 7), Luminophor und Öl aus den Lagern (10 und 11) mit Hilfe von Förderern (38; 31'; 31; 39', 39; 60) in den Vergaser-Plasmaofen (40) mit dem internen Bogen übersandt werden, wo sie bei der Temperatur von 3000-5000°C und in der sauerstofffreien Atmosphäre dem thermischen Zerfall und der Destruktion unterzogen werden, so dass Metalllegierung (41), kleine Menge von Schlamm (42) und Synthesegas (43) mit den Eigenschaften ähnlich dem Synthesegas, das aus dem Konverter-Plasmaofen (32) erhalten wird, entsteht.
- in der dritten Etappe das Synthesegas (28), dass von Energieerzeuger (27) befreit wird, das Synthesegas (35), dass im Konverter-Plasmaofen (32) befreit wird und Synthesegas (43), das im Vergaser-Plasmaofen befreit wird, zum Plasmakonverter (44) übergeben werden, der von hochenergetischem Plasmastrom mit der Temperatur von 3000-8000°C gespeist wird und wenn große dynamische Kräfte, die vom Plasmastrom in der Temperatur von 1200-1400°C erzeugt werden, vorkommen, unterliegt dieses Synthesegas in der Zeit von ca. 2 Sekunden dem wirksamen Zerfall in harmloses Brenngas, das grundlegende Molekülen enthält, das zur Kühlungs- und Reinigungsanlage (45) übersandt wird, in der es innerhalb von ca. 1 Sekunde auf die Temperatur von 700-800°C durch heftiges Mischen mit dem gleichen Gas abgekühlt wird, das vorher auf die Temperatur von circa 100°C abgekühlt wurde, wobei die flüchtigen Metallgasen wie Zink, Blei und Quecksilber, die sich noch in den Synthesegasen (28), (35) und (43) befinden können, während dieser Abkühlung separiert werden und sich im unteren Teil der Kühlungsanlage (45) absetzen, danach werden sie zur Verwendung in den Induktions-Tiegelöfen (47) zur Feuerraffination der Metalllegierungen (29), (33) und (41) übergeben, dagegen wird der entstandene Staub zum Staubgranulierer (36) übergeben und das abgekühlte Gas wird im Nassabscheider der Kühlungs- und Reinigungsanlagen (45) von den sonstigen unerwünschten Cl und Fe Stoffen gereinigt, wobei so gereinigtes Gas im Gasofen (49) zur Wiedergewinnung der Wärmeenergie gebrannt wird, dagegen werden die im Prozess im Energiegranulierer (27), Plasmakonverter (32) und Plasmavergaser (40) befreiten Metalllegierungen mit dem Gehalt von hauptsächlich Kupfer (29), (33) und (41) sowie Schlamm (30), (34) und (42) zu Induktions-Tiegelöfen (47) übersandt, wo sie der Feuerraffination und dem Abformen in die gewünschten Legierungen auf Basis von Kupfer unterliegen, und der vorher befreite Schlamm (54), der hauptsächlich Aluminium- und Siliziumoxide enthält, der thermischen Behandlung zwecks seines Abbaus (55), der zum Erhalt ihrer glasierten Fraktion, die gegen Ablaugung beständig ist, führt.

2. Methode der Destruktion nach Anspruch 1, **dadurch gekennzeichnet, dass** im Laufe des Prozesses im Plasmavergaser (40) und Plasmawandler (44) das erhaltene Brenngas am Ausgang auf der Station des elektronischen Systems der Kontrolle des Zerfallprozeses (61) dauernd kontrolliert wird, so, dass der Gehalt an CO und CO₂ mit der erfüllten folgenden Voraussetzung: 0,2 < CO₂ / (CO₂ + CO) < 0,4 erhalten wird.

3. Verfahren und System zur Wiedergewinnung von Metallen, ökologischem Schlamm und Energie aus elektronischen Abfallgeräten, mit dem Lager für diese Geräte, der Zersplitterungsanlage und Vergasungsofen für die Geräte, mittels Transportförderer gekoppelt und mit dem Hauptlager (2) für die gesammelten elektronischen und elektrotechnischen Abfallgeräte, das mit Hilfe von Bandfördern (3) mit der Mehrstationen-Verarbeitungsanlage (4) zur Demontage und zum Abscheiden der Teile dieser Geräte, mit Hilfe der Bandförderer (24' und 39) durch das Lager (9) der elektrischen Batterien mit der Mühle (25) zu deren Zerkleinerung und deren Lager (26) und Vergaser-Plasmaofen (40) gekoppelt ist, und mit Hilfe des Förderers (38) mit dem Lager (37) der industriellen Katalysatoren und Vergaser-Plasmaofen (40), dagegen ist die Verarbeitungsanlage (4) mit Hilfe des Bandförderers (12) mit dem Lager (14) der Teile mit dem Gehalt an Eisen gekoppelt, und mit Hilfe des Förderers (13) mit dem Lager (15) der Teile mit dem Gehalt an Aluminium gekoppelt, dagegen durch entsprechende Bandförderer (16 und 18, 20 sowie 22, 31, 24 und 39) mit dem Brecher (17) für Kunststoffe und deren Lager (19) sowie Energieerzeuger (27), mit dem Brecher (21) der Kupferteile und deren Lager (23), Konverter-Plasmaofen (32), und dem Lager (10) von Luminophor und dem Lager (11) für Öl und Kältemittel, wobei die in diesen Anlagen erhaltenen Metalllegierungen (29, 33 und 41) und Schlamm (30, 34 und 42) auf den gemeinsamen Bandförderer (51), der mit den Induktions-Tiegelöfen zur Feuerraffination (47) gekoppelt ist, geleitet werden und diese weiterhin mit dem Schlammreduktionsgerät (55) und die Synthesegase (28, 35, 43), die in diesen Anlagen erhalten werden, werden in den gemeinsamen Speiser (59) geleitet, der mit dem Staubgranulierer (36) und Plasmakonverter (44) gekoppelt ist, der mit der Kühlungs- und Reinigungsanlage (45) verbunden ist, die weiterhin mit dem Gasofen (49) verbunden ist, der mit dem Wärmetauscher (50) und der Dampfturbine (57) verbunden ist und durch die Anlage (62) zur Überwachung der Rauchgasemmissionen mit dem Schornstein (58) und zusätzlich mit dem Förderer (48) mit dem Staubgranulierer (36) und dem Bandförderer (46) mit Induktions-Tiegelöfen (47) verbunden ist.

4. Das System nach Anspruch 3 **dadurch gekennzeichnet, dass** es den Plasma-Konverter (44) verwendet, der mit hochenergetischem Plasmastrom aus dem Plasmaerzeuger mit der Temperatur von 3000-8000°C versorgt wird.

5. Das System nach Anspruch 3 **dadurch gekennzeichnet, dass** es den Konverter-Gasofen (32) mit internem Bogen mit der Temperatur von 2000-5000°C in der Stickstoffatmosphäre verwendet, ausgestattet mit Zyklonsystem zum Staubabfangen.

6. Das System nach Anspruch 3 **dadurch gekennzeichnet, dass** es den Vergaser-Plasmaofen (40) mit internem Bogen mit der Temperatur von 3000-5000°C und der sauerstofffreien Atmosphäre verwendet, ausgestattet mit Zyklonsystem zum Staubabfangen.

7. Das System nach Anspruch 3 **dadurch gekennzeichnet, dass** das System der Kontrolle des Zerfallprozesses (61) mit dem elektronischen System ausgestattet ist, das die CO und CO₂Sensoren, Wärmefühler und Elektroventile besitzt, welche die Stabilisierung des Prozesses der Gasreinigung ermöglichen, so dass die Bedingung 0,2 < CO₂ / (CO₂ + CO) < 0,4 beibehalten wird.

## Revendications

1. Le procédé et dispositif de récupération des métaux, boue écologique et de l'énergie à partir d'équipement électronique usagé, consistant en leur stockage, démontage et triage, broyage d'éléments démontés contenant des métaux et leur alliages ainsi que des plastiques, ensuite en mettant l'ensemble dans le four spécial afin de le gazéifier et en même temps fondre et transmettre le produit obtenu au traitement ultérieur qui se déroule en trois étapes technologiques successives fondamentales et bien liées entres elles, où:
- l'étape première consiste en ce que l'équipement usagé contenant du fer, cuivre, aluminium, plastiques stockés dans un stock principal (2) est transmis par un convoyeur à bande (3) de ce stock vers une ligne technologique semi-automatique de plusieurs postes (4), sur laquelle cet équipement est démonté et classé en groupes d'éléments contenant du fer (5), plastiques (6), cuivre (7) et aluminium (8) ainsi que des batteries électriques (9); en plus, du luminophore aspiré des tubes images ainsi qu'un agent frigorigène et de l'huile récupérés des installations de réfrigération sont stockés dans des stocks (10 i 11); ensuite des éléments de fer groupés (5) et des éléments contenant des alliages d'aluminium (8) sont transmis directement dans des stocks (14 i 15) pour être utilisés à des fins commerciales, pourtant, sur une ligne technologique (4) des éléments y groupés (6), contenant des plastiques, sont transmis au poste de concassage bi-étapes (17) afin d'obtenir des fractions de dimensions inférieures à 10 mm, ensuite, ils sont transmis dans un stock (19); de même, des éléments contenant du cuivre (7) et selectionnés sur cette ligne sont transmis au poste de fragmentation et concassage (21), afin d'obtenir des fractions de dimensions inférieures à 20 mm, ensuite, ils sont transmis dans le stock (23); des batteries électriques (9) sélectionnées et groupées dans un stock principal (2) sont transmis à broyer vers une meuleuse (25), et ensuite dans un stock (26), et des catalyseurs industriels dans un stock (37);
- en deuxième étape, des plastiques fragmentés sont transportés du stock (19) vers un générateur d'énergie (27), où, à 1500-1600°C, ils sont mis à gazéifier en atmosphère sans oxygène, en conséquence, du syngaz (28) est libéré, ainsi que des éléments traces des alliages métalliques (29) et de la boue (30), pendant que des modules et des équipements électroniques broyés ainsi que des câbles du stock (23) sont transmis, en permanence, au converstisseur - four à plasma (32) à l'arc extérieur, où, à 2000-5000°C et en atmosphère d'azote se fait leur décomposition thermique, et en conséquence de cette décomposition est obtenu un alliage métallique (33) à la base du cuivre contenant aussi des quantités inférieures de Sn, Fe, Al, Pb, Zn et des traces d'Ag, et en plus, de la boue (34) et du syngaz (35), des poussières de boue et celles de syngaz (28) sont préalablement retenues dans ce convertisseur et mises à granuler dans un granulateur de poussière (36), et des batteries du stock (26) fragmentées et du granulé des granulateurs de poussières (36) avec des catalyseurs industriels du stock (37), avec du luminophore et des huiles du stock (10 et 11) sont transmis à l'aide des convoyeurs (38; 31'; 31; 39', 39; 60) vers un gazéifieur - four à plasma (40) à l'arc intérieur où, à 3000-5000°C et en atmosphère sans oxygène suivent une transformation thermique et une destruction en résultat desquelles on obtient un alliage métallique (41), petite quantité de la boue (42) et du syngaz (43) de priopriétés semblables au syngaz obtenu du converteur-four à plasma (32).
- en troisième étape, du syngaz (28) libéré dans un générateur d'énergie (27), du syngaz (35) libéré dans un converstisseur - four à plasma (32) et du syngaz (43) libéré dans un gazéifieur - four à plasma sont transmis vers un convertisseur à plasma (44) alimenté par un jet de plasma à haute énergie à température de 3000-8000°C et dans des conditions de grands efforts dynamiques provoqués par un jet de plasma à 1200-1400°C, pendant environ 2 secondes ce syngaz est soumis à la décomposistion efficace en gaz combustible innoffensif contenant des molécules fondamentales, lequel est transmis vers une installation de refroidissement et nettoyage (45), où, pendant environ 1 seconde le gaz est refroidi jusqu'à 700-800°C par une mixage violante de ce gaz avec le même gaz mais refroidi préalablément jusqu'à température d'environ 100°C, et avec cela, des gaz volatils des métaux comme zinc, plombe, mercure qui peuvent se trouver encore dans des syngaz (28), (35) i (43) pendant ce refroidissement, sont séparés, sédimentent dans la partie basse d'une installation de refroidissement (45), après ils sont transmis à être utilisés aux fours à pot induction (47) pour une raffinage pyrométallurgique des alliages métalliques (29), (33) i (41), pourtant, de la poussière produite est transmise vers un granulateur de poussière (36), et le gaz refroidi est soumis au nettoyage suivant dans un épurateur d'une installation de refroidissement et nettoyage (45) des résus indésirables des composés de Cl et de F, après cela, le gaz nettoyé est soumis à la combustion au four à gaz (49) afin de récupérer une énergie thérmique, pourtant, des alliages séparés lors du procès se déroulant dans un générateur d'énergie (27), convertisseur à plasma (32) et un gazéifieur à plasma (40), des métaux contenant surtout du cuivre (29), (33) et (41) et de la boue (30), (34) et (42) sont transmis aux fours à pot induction (47), où ils sont soummis au raffinage pyrométallurgique et au moulage pour des alliages souhaités à la base du cuivre, pendant que de la boue (54) obtenue préalablement et contenant généralement des oxydes d'aluminium et du silicium est soumise au traitement thermique pour obtenir sa réduction (55) ce qui amène à obtenir sa fraction vitrifiée résistante au lessivage.

2. Le procédé et dispositif de récupération des métaux, boue écologique et de l'énergie selon la revendication 1 **caractérisé en ce que** pendant le procès se déroulant dans un gazéifieur à plasma (40) et un convecteur à plasma (44) le gaz combustible obtenu à la sortie est controlé en continu à l'aide d'un système électronique de contrôle du procès de décomposition (61) de la manière pour que la teneur de CO et CO₂ soit maintenue en concervant la condition: 0,2 < CO₂ / (CO₂ + CO) < 0,4.

3. Le procédé et dispositif de récupération des métaux, boue écologique et de l'énergie à partir d'équipement électronique usagé équipé d'un stock pour ce matériel, une installation de concassage et un four à gasifier ce matériel accouplés à l'aide des transporteurs ainsi que possédant un stock principal (2) d'équipement électrique et électronique récupéré, lequel, à l'aide du convoyeur à bande (3) est accouplé avec une ligne technologique de plusieurs postes semi-automatique (4) de démontage et ségrégation des éléments de ce matériel à l'aide des convoyeurs à bandes (24' i 39) par un stock (9) des batteries électriques avec une meuleuse (25) à broyage ainsi qu'avec leur stock (26) et un gazéifieur - four à plasma (40), et à l'aide d'un convoyeur (38) avec un stock (37) des catalyseurs industriels et un gazéifieur - four à plasma (40), alors qu'une ligne technologique (4) est accouplée à l'aide d'un convoyeur à bande (12) avec un stock (14) des éléments contenant du fer, et à l'aide d'un convoyeur (13) avec un stock (15) des éléments contenant de l'aluminium et à l'aide des convoyeurs à bande (16 et 18, 20 ainsi que 22, 31, 24 et 39) avec un concasseur (17) des plastiques et avec leur stock (19) et avec un générateur d'énergie (27), avec un concasseur (21) des éléments en cuivre et leur stock (23), converstisseur - four à plasma (32), stock (10) de luminophore et stock (11) d'huile et des agents refroidisseurs, alors que des alliages de métaux (29, 33 et 41) et de la boue (30, 34 i 42) obtenus dans ces dispositifs sont dirigés sur un convoyeur à bande commun (51) accouplé avec des fours à pot induction (47), et ceux-ci avec un réducteur de la boue (55), et des syngaz (28, 35, 43) obtenus dans ces dispositifs sont transmis vers un alimenteur (59) accouplé avec un granulateur de poussière (36) et un convertisseur à plasma (44) lié avec une installation de refroidissement et nettoyage (45), celle-ci est liée avec un four à gaz (49), lié avec un échangeur thermique (50) et une turbine à vapeur (57), et par un dispositif (62) de suivie d'emissions de gaz combustible est lié avec une cheminée (58) et en plus à l'aide d'un convoyeur (48) avec un granulateur de poussière (36) et d'un convoyeur à bande (46) avec des fours à pot induction (47).

4. Le dispositif selon la revendication 2 **caractérisé en ce qu'**il utilise un convertisseur à plasma (44) alimenté par un jet de plasma à haute énergie du générateur à plasma à 3000-8000°C.

5. Le dispositif selon la revendication 3 **caractérisé en ce qu'**il utilise un convertisseur - four à gaz (32) à l'arc extérieur de température s'élèvant à 2000-5000°C en atmosphère d'azote, équipé en système cyclonique permetant de récupérer des poussières.

6. Le dispositif selon la revendication 3 **caractérisé en ce qu'**il utilise un gazéifieur - four à plasma (40) à l'arc intérieur de température s'élèvant à 3000-5000°C en atmosphère sans oxygène, équipé en système cyclonique permetant de récupérer des poussières.

7. Le dispositif selon la revendication 3 **caractérisé en ce que** le système de contrôle du procès de décomposition (61) est équipé en système électronique avec des capteurs CO et CO₂, thermocouples et électrovalves permettant de stabiliser le procès de nettoyage du gaz de manière que la condition 0,2 < CO₂ / (CO₂ + CO) < 0,4 soit maintenue.
